# EUROPÄISCHE PATENTSCHRIFT

(11) **EP 2 541 669 B1**
(45) Veröffentlichungstag und Bekanntmachung des Hinweises auf die Patenterteilung: **25.06.2014**
(21) Anmeldenummer: 12004893.9
(22) Anmeldetag: 29.06.2012
(51) Int. Cl.: H01M 10/613, H01M 10/625, H01M 10/647, H01M 10/6556, H01M 10/6567

(54) **Kühlvorrichtung für eine Fahrzeugbatterie, Fahrzeugbatterie sowie Verfahren zur Herstellung einer Kühlvorrichtung**
Cooling device for a vehicle battery, vehicle battery and method for producing a cooling device
Dispositif de refroidissement pour batterie de véhicule, batterie de véhicule et procédé de fabrication d'un dispositif de refroidissement

(30) Priorität: 30.06.2011 DE 102011107607
(43) Veröffentlichungstag der Anmeldung: 02.01.2013
(73) Patentinhaber: Valeo Klimasysteme GmbH, 96476 Rodach (DE)
(72) Erfinder: Haussmann, Roland, 68169 Wiesloch (DE)
(74) Vertreter: Prinz & Partner

(56) Entgegenhaltungen:
- EP-A1- 2 144 323
- WO-A1-2010/108885
- DE-A1-102009 018 787
- US-A1- 2008 280 198

## Beschreibung

Die Erfindung betrifft eine Kühlvorrichtung für eine Fahrzeugbatterie, ein Verfahren zur Herstellung einer solchen Kühlvorrichtung und eine Fahrzeugbatterie mit einer Mehrzahl von Beutelzellen.

Aus dem Stand der Technik sind Kühlvorrichtungen für Fahrzeugbatterien bekannt, welche flexibel ausgebildete Kühlplatten aufweisen, die an einer zu kühlenden Oberfläche einer Batterie anliegen. Durch die flexible Ausbildung der Kühlplatten können diese optimal an einer zu kühlenden Fläche der Batterie anliegen. Somit wird die Fläche, über welche Wärme übertragen wird, maximiert und eine optimale Wärmeübertragung zwischen Batterie und Kühlplatte gewährleistet. Die Batterieplatte muss dazu beispielsweise durch ein Außengehäuse oder ein anderes Bauteil gegen die zu kühlende Fläche der Batterie beaufschlagt werden, wodurch zusätzliche Bauteile erforderlich sind.

Alternativ sind starre Kühlplatten bekannt, die beispielsweise Kühlmittelleitungen aufweisen, die aus einer massiven Metallplatte herausgefräst sind. Die Herstellung solcher Kühlplatten ist aufwendig und teuer.

Herkömmliche Batteriezellen weisen ein im Wesentlichen starres Gehäuse auf, an dem eine Kühlplatte anliegen kann. Ferner sind beutelförmige Batteriezellen bekannt, bei denen die Elektroden und ein Elektrolyt in einer flexiblen Beutelpackung angeordnet sind. Diese Beutelzellen werden in einem starren Gehäuse angeordnet.

Aus der gattungsgemäßen EP 2 144 323 A1 ist ferner eine Antriebsbatteriebaugruppe für ein Elektro- Brennstoffzellen- oder Hybridfahrzeug bekannt, welche mehrere nach außen durch jeweils eigene Zellengehäuse geschlossene, zu einem Zellenpaket zusammengefasste Batteriezellen aufweist. Wenigstens eine flächig an den Zellengehäusen anliegende, zweiwandige Kühllamelle führt Wärme über ein Kühlfluid ab, wobei Kanäle für das Kühlfluid dadurch gebildet werden, dass die beiden Wände der Kühllamelle abschnittsweise beabstandet sind. Zwischen den Wänden der Kühllamelle kann seitlich der Kanäle für Kühlfluid ferner ein Spalt ausgebildet sein, in dem beispielsweise ein Dichtmittel, Klebstoff oder Lot zum Verbinden Wände untergebracht ist.

Aufgabe der Erfindung ist es, eine kompakte und kostengünstig herstellbare Kühlvorrichtung für eine Fahrzeugbatterie, insbesondere für eine Fahrzeugbatterie mit Beutelzellen, zu schaffen.

Die Aufgabe wird erfindungsgemäß durch eine Kühlvorrichtung für eine Fahrzeugbatterie gelöst, mit einer Kühlplatte, die durch ein erstes, eben ausgebildetes Metallblech und ein zweites, umgeformtes Metallblech gebildet wird. Die beiden Metallbleche sind über zumindest eine Fügefläche miteinander verbunden. Das zweite Metallblech weist zumindest eine erste Vertiefung relativ zur Fügefläche auf, welche mit dem ersten Metallblech eine Kühlmittelleitung mit Anschlüssen für ein Kühlmittelsystem bildet. Das zweite Metallbleich weist ferner eine zweite Vertiefung relativ zur Fügefläche auf, welche mit dem ersten Metallblech einen kühlmittelfreien Hohlraum zur Versteifung der Kühlplatte bildet. Dies ermöglicht eine einfache und somit kostengünstige Herstellungsweise der Kühlplatte. Ferner kann die Kühlvorrichtung aufgrund ihrer steifen Ausführung ein eigenständiges Teil eines Gehäuses bilden. Der leere Hohlraum erhöht das Gewicht nicht.

Insbesondere ist die Kühlmittelleitung mit Anschlüssen für ein Kühlmittelsystem versehen. Zur Versteifung der Kühlplatte trägt eine Erhöhung des Biege- und/oder Torsionsmoduls der Kühlplatte bei.

Die Tiefe der zweiten Vertiefung ist größer als die Tiefe der ersten Vertiefung. Dies ermöglicht eine optimale Ausbildung des kühlmittelfreien und leeren Hohlraums zur Versteifung der Kühlplatte, während die Kühlmittelleitung aufgrund ihrer geringeren Tiefe beispielsweise einen geringeren Querschnitt aufweist. Auf diese Weise wird die Strömungsgeschwindigkeit des Kühlmittels erhöht und das Gewicht der Kühlvorrichtung im Betrieb reduziert.

Die Fügefläche kann eine Breite zwischen 1 mm und 5 mm aufweisen. Diese Breite ermöglicht ein optimales Fügeverfahren zur Herstellung der Verbindung der beiden Metallbleche über die Fügefläche, beispielsweise durch Hartlöten.

Ein vorteilhafter Verlauf der Kühlmittelleitung wird ermöglicht, indem sich die zumindest eine erste Vertiefung im Wesentlichen parallel zur Längsachse der Kühlplatte erstreckt und vorzugsweise haarnadelförmig verläuft.

Eine zweite Vertiefung kann sich über die gesamte Länge und/oder Breite des zweiten Metallblechs erstrecken und insbesondere randseitig verlaufen. Auf diese Weise wird die versteifende Wirkung der zweiten Vertiefung über die gesamte Länge bzw. Breite des Metallblechs erzeugt.

Die zweite Vertiefung verläuft insbesondere mittig. Es ist möglich, dass zumindest eine weitere Vertiefung im zweiten Metallblech ausgebildet ist, welche sich in Draufsicht auf die Kühlplatte im Wesentlichen senkrecht zur zweiten Vertiefung erstreckt und mit dem ersten Metallblech einen Hohlraum zur Versteifung der Kühlplatte bildet. Dies ermöglicht eine Versteifung der Kühlplatte in unterschiedlichen Richtungen.

Die Kühlplatte ist beispielsweise rechteckig ausgebildet.

Eine zusätzliche Versteifung der Kühlplatte kann erreicht werden, indem das erste oder das zweite Metallblech eine Abkantung zur Versteifung der Kühlplatte aufweist.

Eine stabile Ausführung der Kühlplatte mit geringem Gewicht wird beispielsweise ermöglicht, indem die Dicke des ersten Metallblechs im Bereich von 0,8 mm bis 3 mm, vorzugsweise von 1,2 mm bis 1,8 mm, und die Dicke des zweiten Metallblechs im Bereich von 0,4 mm bis 1,5 mm, vorzugsweise zwischen 0,8 mm bis 1,2 mm liegt.

Eine parallele Führung von Kühlmittelleitungen in der Kühlplatte wird auf einfache Weise ermöglicht, indem die erste Vertiefung im zweiten Metallblech mit dem ersten Metallblech zwei Kühlmittelleitungen bildet, welche einen gemeinsamen Kühlmittelverteiler und/oder einen gemeinsamen Kühlmittelsammler aufweisen.

Vorteilhafterweise wird eine Befestigung der Batteriekühlvorrichtung an einer Batterie oder einem Batteriegehäuse ermöglicht, indem die Kühlvorrichtung an zumindest einem seitlichen Randbereich Befestigungselemente aufweist.

Um die Bildung von wärmeisolierenden Luftspalten zwischen der Kühlplatte und einer zu kühlenden Oberfläche der Batterie zu verhindern, kann eine deformierbare, wärmeleitende, elektrisch isolierende Schicht, insbesondere eine Weichsilikonmatte mit keramischen Zusätzen, vorgesehen sein, welche zwischen der ebenen Oberfläche des ersten Metallblechs und einer zu kühlenden Oberfläche der Fahrzeugbatterie angeordnet ist.

Erfindungsgemäß wird eine oben beschriebene Kühlvorrichtung in einer Fahrzeugbatterie mit einer Mehrzahl von Beutelzellen eingesetzt. Auf diese Weise kann die Kühlplatte vorteilhaft in Bezug auf Bauraum und Gewicht in ein Gehäuse der Fahrzeugbatterie integriert werden.

Vorzugsweise ist eine deformierbare, wärmeleitende, elektrisch isolierende Schicht zwischen den elektrischen Kontakten der Beutelzellen und der Kühlplatte der Kühlvorrichtung vorgesehen, wobei die Schicht durch die Kühlplatte gegen die elektrischen Kontakte der Beutelzellen beaufschlagt wird. Dies ermöglicht eine Kühlung der Beutelzelle über die elektrischen Kontakte. Auf diese Weise wird eine hohe Effizienz und eine homogene Kühlung der Beutelzellen ermöglicht.

Beispielsweise wird eine oben beschriebene Kühlvorrichtung nach einem erfindungsgemäßen Verfahren mit den folgenden Verfahrensschritten hergestellt. Ein erstes und ein zweites Metallblech wird bereitgestellt, wobei das erste und/oder das zweite Metallblech lotbeschichtet ist. Das zweite Metallblech wird umgeformt, insbesondere durch Tiefziehen, wobei zumindest eine erste und zumindest eine zweite Vertiefung ausgebildet wird. Das erste und das zweite Metallblech werden formschlüssig verbunden, insbesondere mittels Durchsetzfügen und/oder Klemmen, wobei das erste und das zweite Metallblech an einer gemeinsamen Fügefläche mit der zumindest einen lotbeschichteten Seite aneinander anliegen. In einem anschließenden Verfahrensschritt werden die beiden Metallbleche mittels Hartlöten im Bereich der gemeinsamen Fügefläche stoffschlüssig verbunden. Dies ermöglicht eine einfache und kostengünstige Herstellung der Kühlvorrichtung. Durch die formschlüssige Verbindung vor dem Lötverfahrensschritt wird eine optimale Positionierung der beiden Metallbleche zueinander gewährleistet, wodurch eine hohe Qualität der Lötverbindung und somit eine geringe Ausschussrate bei der Herstellung erreicht werden.

Weitere Merkmale und Vorteile der Erfindung ergeben sich aus der nachfolgenden Beschreibung und den Zeichnungen, auf die Bezug genommen wird. In den Zeichnungen zeigen:
- Figur 1 eine perspektivische Ansicht einer erfindungsgemäßen Kühlvorrichtung;
- Figur 2 eine Schnittansicht einer erfindungsgemäßen Fahrzeugbatterie mit einer Kühlplatte der Kühlvorrichtung gemäß Figur 1;
- Figur 3 eine Draufsicht auf die Kühlvorrichtung gemäß Figur 1, genauer auf das zweite, umgeformte Metallblech;
- Figur 4 eine Detailansicht eines ersten Endbereichs der Kühlvorrichtung gemäß Figur 1;
- Figur 5 eine perspektivische Ansicht des gegenüberliegenden Endbereichs der Kühlvorrichtung gemäß Figur 1;
- Figur 6 eine Schnittansicht der Kühlvorrichtung gemäß Figur 1 im Bereich eines Anschlusses für ein Kühlmittelsystem; und
- Figur 7 einen Verfahrensschritt eines erfindungsgemäßen Herstellungsverfahrens der Kühlvorrichtung gemäß Figur 1.

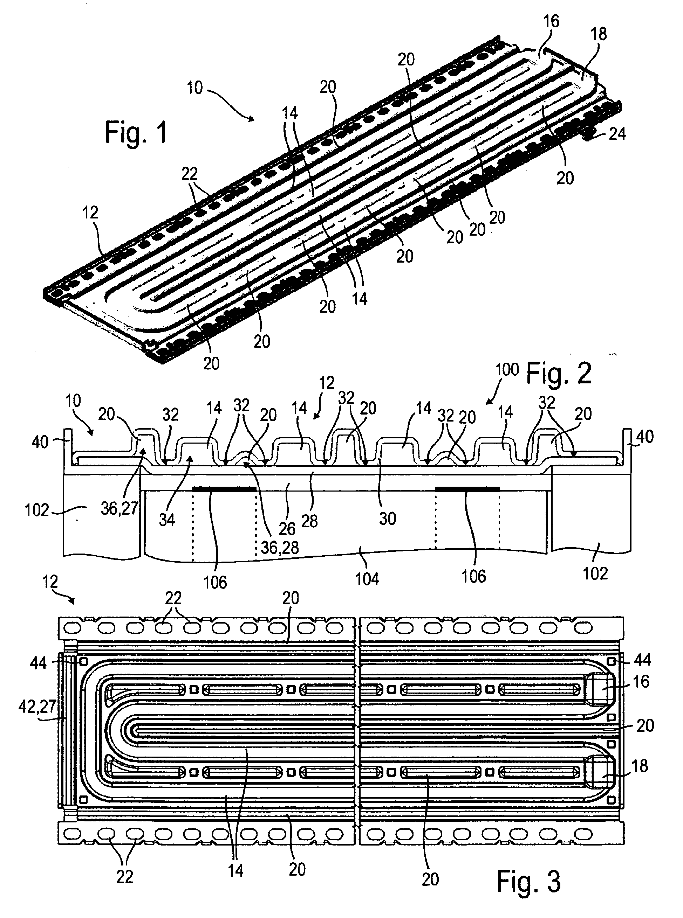

Figur 1 zeigt eine perspektivische Ansicht einer Kühlvorrichtung 10 für eine Fahrzeugbatterie 100. Die Kühlvorrichtung 10 umfasst eine Kühlplatte 12, die eine eben ausgebildete Unterseite aufweist sowie zwei parallel verlaufende Kühlmittelleitungen 14 mit einem gemeinsamen Kühlmittelverteiler 16 und einem gemeinsamen Kühlmittelsammler 18. Ferner weist die Kühlplatte 12 mehrere kühlmittelfreie Hohlräume 20 auf, die zur Versteifung der Kühlplatte 12 ausgebildet sind und das Biege- und/oder Torsionsmodul der Kühlplatte 12 erhöhen.

An den in Längsrichtung seitlichen Rändern der Kühlplatte 12 sind Befestigungselemente 22 in Form von Löchern für Schrauben zur Befestigung der Kühlvorrichtung 10 an einer Batterie oder einem Batteriegehäuse 102.

Die Kühlvorrichtung 10 umfasst ferner Kühlmittelanschlüsse 24, zum Anschluss der Kühlvorrichtung an ein Kühlmittelsystem. Die Kühlvorrichtung kann mit flüssigem oder phasenwechselndem Kühlmittel betrieben werden.

Figur 2 zeigt eine Schnittansicht der Kühlplatte 12 der Kühlvorrichtung 10 und einer Fahrzeugbatterie 100. Die Fahrzeugbatterie 100 umfasst ein Batteriegehäuse 102 und eine Mehrzahl von beutelförmigen Batteriezellen 104. Die Kühlplatte 12 der Kühlvorrichtung 10 bildet eine Seitenwand des Batteriegehäuses 102.

Die beutelförmigen Batteriezellen 104 weisen jeweils zwei Elektrodenanschlüsse 106 auf, welche streifenförmig ausgebildet sind und außerhalb der Beutelzelle 104 abgewinkelt und senkrecht zur Zeichenebene parallel zur Kühlplatte 12 verlaufen. Zwischen den Elektrodenanschlüssen 106 und der eben ausgebildeten unteren Fläche der Kühlplatte 12 ist eine deformierbare, wärmeleitende, elektrisch isolierende Schicht 26 vorgesehen. Die Schicht 26 ist beispielsweise eine Weichsilikonmatte mit keramischen Zusätzen, die eine relativ gute Wärmeleitung zwischen der Kühlplatte 12 und den Elektrodenanschlüssen 106 der Beutelzellen 104 ermöglicht. Die Dicke der Schicht 26 ist so gewählt, dass die Kühlplatte 12 in ihrer montierten Position die Schicht 26 gegen die Elektrodenanschlüsse 106 beaufschlagt, wodurch die Schicht 26 sich optimal an die Oberfläche der Kühlplatte 12 einerseits und die Elektrodenanschlüsse 106 andererseits anpasst und somit eine optimale Wärmeübertragung ermöglicht.

Im Folgenden wird der Aufbau der Kühlvorrichtung 10 und insbesondere der Kühlplatte 12 beschrieben. Die Kühlplatte wird durch ein erstes, eben ausgebildetes Metallblech 28 und ein zweites, umgeformtes Metallblech 30 gebildet.

Die beiden Metallbleche 28, 30 sind über Fügeflächen 32 miteinander verbunden. Die maximale Breite der Fügeflächen 32 liegt zwischen 1 mm und 5 mm.

Das zweite Metallblech 30 ist so geformt, dass es eine erste Vertiefung 34 relativ zur Fügefläche 32 aufweist. Gemeinsam mit dem ersten Metallblech 28 wird auf diese Weise zwischen den beiden Metallblechen 28, 30 eine Kühlmittelleitung 14 ausgebildet. Der Querschnitt der Kühlmittelleitung 14 ist ausgebildet, um einen guten Durchfluss von Kühlmittel zu ermöglichen sowie eine gute Wärmeübertragung zwischen Kühlmittel und dem ersten Metallblech 28 zu ermöglichen.

Das umgeformte zweite Metallblech 30 weist ferner zweite Vertiefungen 36 relativ zur Fügefläche auf, welche mit dem ersten Metallblech 28 einen kühlmittelfreien, leeren Hohlraum 20 zur Versteifung der Kühlplatte 12 bilden. Die Geometrie der kühlmittelfreien Hohlräume 20 kann auf die gewünschte Versteifung der Kühlplatte 12 optimiert werden.

Die zweiten Vertiefungen 36 umfassen einerseits große Vertiefungen 27 und andererseits kleine Vertiefungen 38, die unterschiedliche Geometrien und unterschiedliche Höhen aufweisen. Die Vertiefungen 27 weisen im Wesentlichen senkrechte Seitenwände auf und besitzen eine Tiefe, die größer ist als die Tiefe der ersten Vertiefungen 34, welche die Kühlmittelleitungen 14 bilden. Die kleinen Vertiefungen 38 andererseits weisen Seitenwände auf, die sich in einem 45°-Winkel zur Fügefläche 32 erstrecken und eine entsprechend geringere Tiefe aufweisen.

Im seitlichen Randbereich der Kühlplatte 12 ist ein zusätzliches Verstärkungsblech 40 vorgesehen, welches im Bereich der Befestigungselemente 22 liegt und welches abgewinkelt ausgebildet ist. Das Verstärkungsblech 40 erstreckt sich über die gesamte Höhe der Kühlplatte 12.

Figur 3 zeigt eine Draufsicht auf die Kühlplatte 12 der Kühlvorrichtung 10. Benachbart zu den seitlichen Randbereichen mit den Befestigungselemente 22 erstrecken sich zwei zweite Vertiefungen 36 zur Versteifung der Kühlplatte über die gesamte Länge der Kühlplatte 12. Am linken Ende der Kühlplatte 12 ist eine weitere Vertiefung 42 im zweiten Metallblech 30 ausgebildet, welche sich in Draufsicht auf die Kühlplatte 12 im Wesentlichen senkrecht zu den zweiten Vertiefungen 36 erstreckt und mit dem ersten Metallblech 28 einen Hohlraum zur Versteifung der Kühlplatte 12 bildet. Die beiden Kühlmittelleitungen 14 erstrecken sich im Wesentlichen parallel zur Längsachse der Kühlplatte 12 und verlaufen haarnadelförmig. Zwischen den Kühlmittelleitungen 14 sind jeweils kleine Vertiefungen 38 zur Versteifung der Kühlplatte 12 vorgesehen.

Ferner ist eine Mehrzahl von Befestigungspunkten 44 auf der Kühlplatte 12 verteilt vorgesehen, an welchen die beiden Metallbleche 28, 30 formschlüssig miteinander verbunden sind. In der gezeigten Ausführungsform sind die beiden Metallbleche 28, 30 durch Clinchverbindungen verbunden.

Ferner sind die beiden Metallbleche 28, 30 in ihrem seitlichen Randbereich durch Klemmen miteinander verbunden, wobei das erste Metallblech 28 abschnittsweise um das zweite Metallblech 30 gebogen ist.

Im Bereich der Fügefläche 32 sind die Metallbleche durch eine Lötverbindung miteinander verbunden.

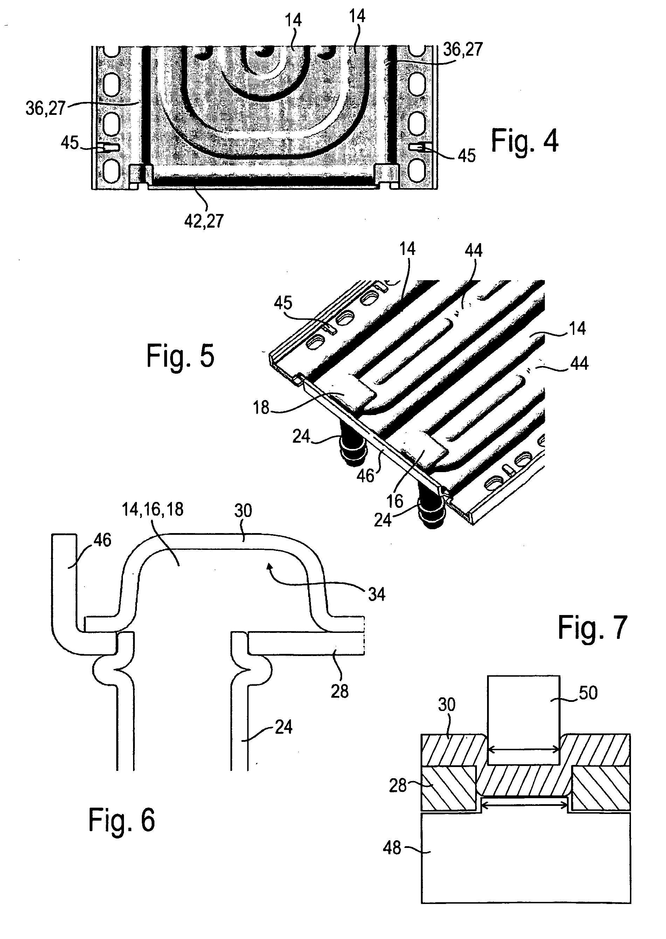

Figur 4 zeigt den ersten Endbereich der Kühlplatte 12 mit den zur Versteifung der Kühlplatte 12 vorgesehenen Vertiefungen 36, 42. Durch die Anordnung der versteifenden Vertiefungen in unterschiedlichen Richtungen können verschiedene Biegemodule der Kühlplatte 12 in unterschiedlichen Richtungen erhöht werden.

Figur 5 zeigt das gegenüberliegende Ende der Kühlplatte 12, an dem die Kühlmittelanschlüsse 24 angeordnet sind. An diesem Ende wird die Kühlplatte 12 zusätzlich durch eine Abkantung 46 des ersten Metallblechs 28 in Richtung des zweiten Metallblechs 30 versteift.

In dieser Ansicht sind auch die Befestigungspunkte 44 und die Klemmpunkte 45 der beiden Metallbleche im Randbereich gut zu erkennen.

Figur 6 zeigt eine Schnittansicht durch den Bereich der Anschlüsse 24 der Kühlvorrichtung 10. Der Anschluss 24 wird durch ein Anschlussrohr gebildet, welches in eine Öffnung des ersten Metallblechs 28 eingeführt wird. Im Bereich des Anschlusses 24 ist die Vertiefung 34 zur Bildung der Kühlmittelleitung 14 verstärkt ausgebildet, sodass ein Kühlmittelverteiler 16 bzw. Kühlmittelsammler 18 gebildet wird. Auf diese Weise kann Kühlmittel gleichmäßig auf die beiden parallel verlaufenden Kühlmittelleitungen 14 verteilt werden.

Des Weiteren ist die Abkantung 46 des ersten Metallblechs 28 gut zu erkennen.

In der gezeigten Ausführungsform liegt die Dicke des ersten Metallbleches 28 im Bereich von 0,8 mm bis 3 mm, vorzugsweise in einem Bereich von 1,2 mm bis 1,8 mm und die Dicke des zweiten Metallblechs 30 im Bereich von 0,4 mm bis 1,5 mm, vorzugsweise 0,8 mm bis 1,2 mm.

In der gezeigten Ausführungsform ist das zweite Metallblech 30 dünner ausgebildet als das erste Metallblech 28. Die beiden Metallbleche können aber auch dieselbe Dicke aufweisen oder andere Dickenverhältnisse.

Im Folgenden wird ein Herstellungsverfahren der Kühlvorrichtung 10 beschrieben.

Das erste und das zweite Metallblech 28, 30 werden bereitgestellt, wobei zumindest eines der beiden Metallbleche 28, 30 auf zumindest einer Seite lotbeschichtet ist.

Das zweite Metallblech 30 wird durch Tiefziehen umgeformt, zur Bildung der Vertiefungen 27, 34, 36, 38, 42.

Anschließend werden die beiden Metallbleche 28, 30 formschlüssig miteinander verbunden. Hierzu wird die Kühlplatte 12 an den in Figur 3 gezeigten Befestigungspunkten 44 mittels Durchsetzfügen bzw. Clinchen verbunden.

Dieser Verfahrensschritt ist in Figur 7 dargestellt.

Das zweite Metallblech 30 wird im Bereich einer Ausnehmung im ersten Metallblech 28 durch zwei Stempel 48, 50 verformt, sodass sich eine formschlüssige Verbindung zwischen den beiden Blechen ergibt. Wie in Figur 7 ersichtlich ist, ist der Durchmesser des unteren Stempels 48 auf der Seite des ersten Metallblechs 28 mit einem größeren Durchmesser ausgebildet als der obere Stempel 50, der aufseiten des zweiten Metallblechs 30 angeordnet ist.

Die beiden Metallbleche werden so miteinander verbunden, dass die Metallbleche 28, 30 an der gemeinsamen Fügefläche mit der zumindest einen lotbeschichteten Seite aneinander anliegen.

In einem abschließenden Verfahrensschritt werden die beiden Metallbleche 28, 30 erhitzt und mittels Hartlöten im Bereich der gesamten gemeinsamen Fügefläche 32 stoffschlüssig miteinander verbunden. Auf diese Weise wird eine hohe Dichtigkeit der Kühlmittelleitungen 14 erreicht.

Durch das formschlüssige Verbinden der beiden Metallbleche vor dem stoffschlüssigen Verbinden wird eine optimale relative Positionierung der beiden Metallbleche zueinander ermöglicht. Auf diese Weise wird eine hohe Qualität der Lötverbindung gewährleistet.

## Patentansprüche

1. Kühlvorrichtung (10) für eine Fahrzeugbatterie (100), mit einer Kühlplatte (12), die durch ein erstes, eben ausgebildetes Metallblech (28) und ein zweites, umgeformtes Metallblech (30) gebildet wird,
wobei die beiden Metallbleche (28, 30) über zumindest eine Fügefläche (32) miteinander verbunden sind und
das zweite Metallblech (30) zumindest eine erste Vertiefung (34) relativ zur Fügefläche (32), welche mit dem ersten Metallblech (28) eine Kühlmittelleitung (14) bildet, und
zumindest eine zweite Vertiefung (36, 27) relativ zur Fügefläche (32) aufweist, welche mit dem ersten Metallblech (28) einen kühlmittelfreien Hohlraum (20) zur Versteifung der Kühlplatte (12) bildet,
**dadurch gekennzeichnet, dass** die Tiefe der zweiten Vertiefung (36, 27) größer ist als die Tiefe der ersten Vertiefung (34).

2. Kühlvorrichtung nach Anspruch 1, wobei die Kühlmittelleitung (14) Anschlüsse (24) für ein Kühlmittelsystem aufweist.

3. Kühlvorrichtung nach einem der vorhergehenden Ansprüche, wobei die Fügefläche (32) eine Breite zwischen 1 mm und 5 mm aufweist.

4. Kühlvorrichtung nach einem der vorhergehenden Ansprüche, wobei sich zumindest eine erste Vertiefung (34) im Wesentlichen parallel zur Längsachse der Kühlplatte (12) erstreckt.

5. Kühlvorrichtung nach Anspruch 4, wobei die erste Vertiefung (34) vorzugsweise haarnadelförmig ist.

6. Kühlvorrichtung nach einem der vorhergehenden Ansprüche, wobei sich eine zweite Vertiefung (36, 27) über die gesamte Länge und/oder Breite des zweiten Metallblechs (30) erstreckt und insbesondere randseitig verläuft.

7. Kühlvorrichtung nach einem der vorhergehenden Ansprüche, wobei die zweite Vertiefung (36, 27) mittig verläuft.

8. Kühlvorrichtung nach einem der vorhergehenden Ansprüche, wobei zumindest eine weitere Vertiefung (42) im zweiten Metallblech (30) ausgebildet ist, welche sich in Draufsicht auf die Kühlplatte (12) im Wesentlichen senkrecht zur zweiten Vertiefung (36, 27) erstreckt und mit dem ersten Metallblech (28) einen Hohlraum (20) zur Versteifung der Kühlplatte bildet.

9. Kühlvorrichtung nach einem der vorhergehenden Ansprüche, wobei das erste oder das zweite Metallblech (28, 30) eine Abkantung (46) zur Versteifung der Kühlplatte (12) aufweist.

10. Kühlvorrichtung nach einem der vorhergehenden Ansprüche, wobei die Dicke des ersten Metallblechs (28) im Bereich von 0,8 mm bis 3mm, vorzugsweise von 1,2 mm bis 1,8 mm liegt.

11. Kühlvorrichtung nach einem der vorhergehenden Ansprüche, wobei die Dicke des zweiten Metallblechs (30) im Bereich von 0,4 mm bis 1,5 mm, vorzugsweise zwischen 0,8 mm bis 1,2 mm liegt.

12. Kühlvorrichtung nach einem der vorhergehenden Ansprüche, wobei die erste Vertiefung (34) im zweiten Metallblech (30) mit dem ersten Metallblech (28) zwei Kühlmittelleitungen (14) bildet, welche einen gemeinsamen Kühlmittelverteiler (16) und/oder einen gemeinsamen Kühlmittelsammler (18) aufweisen.

13. Kühlvorrichtung nach einem der vorhergehenden Ansprüche, wobei die Kühlvorrichtung (10) an zumindest einem seitlichen Randbereich Befestigungselemente (22) zur Befestigung an einer Batterie (100) oder einem Batteriegehäuse (102) aufweist.

14. Kühlvorrichtung nach einem der vorhergehenden Ansprüche, wobei eine deformierbare, wärmeleitende, elektrisch isolierende Schicht (26), insbesondere eine Weichsilikonmatte mit keramischen Zusätzen, vorgesehen ist, welche zwischen der ebenen Oberfläche des ersten Metallblechs (28) und einer zu kühlenden Oberfläche der Fahrzeugbatterie (100) angeordnet ist.

15. Fahrzeugbatterie (100) mit einer Mehrzahl von Beutelzellen (104) und einer Kühlvorrichtung (10) gemäß einem der vorhergehenden Ansprüche.

16. Fahrzeugbatterie (100) nach Anspruch 15, wobei eine deformierbare, wärmeleitende, elektrisch isolierende Schicht (26) zwischen den elektrischen Kontakten (106) der Beutelzellen (104) und der Kühlplatte (12) der Kühlvorrichtung (10) vorgesehen ist, wobei die Schicht (26) durch die Kühlplatte (12) gegen die elektrischen Kontakte (106) der Beutelzellen (104) beaufschlagt wird.

17. Verfahren zur Herstellung einer Kühlvorrichtung (10) nach einem der vorhergehenden Ansprüchen, mit den Verfahrensschritten:
- Bereitstellen eines ersten und eines zweiten Metallblechs (28, 30), wobei das erste und/oder das zweite Metallblech (28, 30) lotbeschichtet ist;
- Umformen des zweiten Metallblechs (30), insbesondere durch Tiefziehen, wobei zumindest eine erste und zumindest eine zweite Vertiefung (34, 36) ausgebildet wird;
- formschlüssiges Verbinden des ersten und zweiten Metallblechs (28, 30), insbesondere mittels Durchsetzfügen und/oder Klemmen, wobei das erste und zweite Metallblech (28, 30) an einer gemeinsamen Fügefläche (32) mit der zumindest einen lotbeschichteten Seite aneinander anliegen; und
- stoffschlüssiges Verbinden des ersten und zweiten Metallblechs (28, 30) mittels Hartlöten im Bereich der gemeinsamen Fügefläche (32).

## Claims

1. A cooling device (10) for a vehicle battery (100), comprising a cooling plate (12) which is formed by a first metal sheet (28) of a flat design and a second, reshaped metal sheet (30),
the two metal sheets (28, 30) being connected with each other by means of at least one joining surface (32), and
the second metal sheet (30) including at least one first depression (34) relative to the joining surface (32), which together with the first metal sheet (28) constitutes a coolant pipe (14), and
at least one second depression (36, 27) relative to the joining surface (32), which together with the first metal sheet (28) constitutes a coolant-free cavity (20) for stiffening the cooling plate (12),
**characterized in that** the depth of the second depression (36, 27) is greater than the depth of the first depression (34).

2. The cooling device according to claim 1, in which the coolant pipe (14) includes connections (24) for a coolant system.

3. The cooling device according to either of the preceding claims, in which the joining surface (32) has a width of between 1 mm and 5 mm.

4. The cooling device according to any of the preceding claims, in which at least one first depression (34) extends substantially parallel to the longitudinal axis of the cooling plate (12).

5. The cooling device according to claim 4, in which the first depression (34) is preferably hairpin-shaped.

6. The cooling device according to any of the preceding claims, in which a second depression (36, 27) extends over the entire length and/or width of the second metal sheet (30) and in particular runs at the edge.

7. The cooling device according to any of the preceding claims, in which the second depression (36, 27) runs in the middle.

8. The cooling device according to any of the preceding claims, in which the second metal sheet (30) has at least one further depression (42) formed therein which, in a top view of the cooling plate (12), extends substantially perpendicularly to the second depression (36, 27) and together with the first metal sheet (28) constitutes a cavity (20) for stiffening the cooling plate.

9. The cooling device according to any of the preceding claims, in which the first or the second metal sheet (28, 30) includes a bent edge (46) for stiffening the cooling plate (12).

10. The cooling device according to any of the preceding claims, in which the thickness of the first metal sheet (28) is in the range of from 0.8 mm to 3 mm, preferably from 1.2 mm to 1,8 mm.

11. The cooling device according to any of the preceding claims, in which the thickness of the second metal sheet (30) is in the range of from 0.4 mm to 1.5 mm, preferably between 0.8 mm and 1.2 mm.

12. The cooling device according to any of the preceding claims, in which the first depression (34) in the second metal sheet (30) together with the first metal sheet (28) constitutes two coolant pipes (14) which include a shared coolant manifold (16) and/or a shared coolant collector (18).

13. The cooling device according to any of the preceding claims, in which the cooling device (10) includes fastening elements (22) at at least one lateral edge region for fastening to a battery (100) or a battery housing (102).

14. The cooling device according to any of the preceding claims, in which a deformable, heat conducting, electrically insulating layer (26), in particular a soft silicone mat with ceramic additives, is provided which is arranged between the flat surface of the first metal sheet (28) and a surface, to be cooled, of the vehicle battery (100).

15. A vehicle battery (100) comprising a plurality of coffee-bag cells (104) and a cooling device (10) according to any of the preceding claims.

16. A vehicle battery (100) according to claim 15, in which a deformable, heat conducting, electrically insulating layer (26) is provided between the electrical contacts (106) of the coffee-bag cells (104) and the cooling plate (12) of the cooling device (10), the layer (26) being urged against the electrical contacts (106) of the coffee-bag cells (104) by the cooling plate (12).

17. A method of manufacturing a cooling device (10) according to any of the preceding claims, comprising the method steps of:
- providing a first and a second metal sheet (28, 30), the first and/or the second metal sheet (28, 30) being solder-coated;
- reshaping the second metal sheet (30), in particular by deep-drawing, at least one first and at least one second depression (34, 36) being formed;
- connecting the first and second metal sheets (28, 30) with an interlocking fit, in particular by means of clinching and/or clamping, the first and second metal sheets (28, 30) resting against each other on a shared joining surface (32) by the at least one solder-coated side; and
- connecting the first and second metal sheets (28, 30) by a substance-to-substance bond by means of brazing in the area of the shared joining surface (32).

## Revendications

1. Dispositif de refroidissement (10) pour une batterie de véhicule (100), comportant une plaque de refroidissement (12) constituée par une première tôle métallique (28) réalisée plate et par une deuxième tôle métallique (30) façonnée,
les deux tôles métalliques (28, 30) étant reliées l'une à l'autre par au moins une face d'assemblage (32), et
la deuxième tôle métallique (30) présentant au moins un premier renfoncement (34) par rapport à la face d'assemblage (32), qui constitue conjointement avec la première tôle métallique (28) un conduit à réfrigérant (14), et
au moins un deuxième renfoncement (36, 27) par rapport à la face d'assemblage (32), qui constitue conjointement avec la première tôle métallique (28) un creux (20) exempt de réfrigérant et destiné à rigidifier la plaque de refroidissement (12),
**caractérisé en ce que** la profondeur du deuxième renfoncement (36, 27) est supérieure à la profondeur du premier renfoncement (34).

2. Dispositif de refroidissement selon la revendication 1, le conduit à réfrigérant (14) présentant des raccords (24) pour un système à réfrigérant

3. Dispositif de refroidissement selon l'une des revendications précédentes, la face d'assemblage (32) présentant une largeur comprise entre 1 mm et 5 mm.

4. Dispositif de refroidissement selon l'une des revendications précédentes, au moins un premier renfoncement (34) s'étendant sensiblement parallèlement à l'axe longitudinal de la plaque de refroidissement (12).

5. Dispositif de refroidissement selon la revendication 4, le premier renfoncement (34) étant de préférence sous forme d'épingle à cheveux.

6. Dispositif de refroidissement selon l'une des revendications précédentes, un deuxième renfoncement (36, 27) s'étendant sur toute la longueur et/ou largeur de la deuxième tôle métallique (30) et en particulier du côté bord.

7. Dispositif de refroidissement selon l'une des revendications précédentes, le deuxième renfoncement (36, 27) s'étendant au centre.

8. Dispositif de refroidissement selon l'une des revendications précédentes, au moins un renfoncement (42) additionnel étant ménagé dans la deuxième tôle métallique (30), qui, dans une vue de dessus sur la plaque de refroidissement (12), s'étend sensiblement perpendiculairement au deuxième renfoncement (36, 27) et constitue conjointement avec la première tôle métallique (28) un creux (20) destiné à rigidifier la plaque de refroidissement.

9. Dispositif de refroidissement selon l'une des revendications précédentes, la première ou la deuxième tôle métallique (28, 30) présentant un pli (46) destiné à rigidifier la plaque de refroidissement (12).

10. Dispositif de refroidissement selon l'une des revendications précédentes, l'épaisseur de la première tôle métallique (28) étant comprise dans la plage de 0,8 mm à 3 mm, de préférence de 1,2 mm à 1,8 mm.

11. Dispositif de refroidissement selon l'une des revendications précédentes, l'épaisseur de la deuxième tôle métallique (30) étant comprise dans la plage de 0,4 mm à 1,5 mm, de préférence de 0,8 mm à 1,2 mm.

12. Dispositif de refroidissement selon l'une des revendications précédentes, le premier renfoncement (34) dans la deuxième tôle métallique (30) constituant conjointement avec la première tôle métallique (28) deux conduits à réfrigérant (14) qui présentent un distributeur de réfrigérant (16) commun et/ou un collecteur de réfrigérant (18) commun.

13. Dispositif de refroidissement selon l'une des revendications précédentes, le dispositif de refroidissement (10) présentant dans au moins une zone de bord latérale des éléments de fixation (22) pour la fixation sur une batterie (100) ou sur un boîtier de batterie (102).

14. Dispositif de refroidissement selon l'une des revendications précédentes, une couche (26) déformable, conductrice de chaleur et électriquement isolante, en particulier une natte en silicone souple à additifs céramiques, étant prévue, laquelle est agencée entre la surface plane de la première tôle métallique (28) et une surface à refroidir de la batterie de véhicule (100).

15. Batterie de véhicule (100), comportant une pluralité de cellules de poche (104) et un dispositif de refroidissement (10) selon l'une des revendications précédentes.

16. Batterie de véhicule (100) selon la revendication 15, une couche (26) déformable, conductrice de chaleur et électriquement isolante étant prévue entre les contacts électriques (106) des cellules de poche (104) et la plaque de refroidissement (12) du dispositif de refroidissement (10), la couche (26) étant sollicitée contre les contacts électriques (106) des cellules de poche (104) par la plaque de refroidissement (12).

17. Procédé de réalisation d'un dispositif de refroidissement (10) selon l'une des revendications précédentes, comprenant les étapes de procédé suivantes :
- fournissement d'une première et d'une deuxième tôle métallique (28, 30), la première et/ou la deuxième tôle métallique (28, 30) étant revêtue(s) d'un métal d'apport de brasage ;
- façonnage de la deuxième tôle métallique (30), en particulier par emboutissage profond en réalisant au moins un premier et au moins un deuxième renfoncement (34, 36) ;
- raccordement par coopération de formes de la première et la deuxième tôle métallique (28, 30), en particulier par clinchage et/ou par serrage, la première et la deuxième tôle métallique (28, 30) étant en appui l'une contre l'autre au niveau d'une face d'assemblage (32) commune par ladite au moins une face revêtue de métal d'apport de brasage ; et
- raccordement par coopération de matières de la première et la deuxième tôle métallique (28, 30) par brasage fort dans la zone de la face d'assemblage (32) commune.
